(19) Europäisches Patentamt
European Patent Office
Office européen des brevets

(11) **EP 1 946 141 B1**

(12) **FASCICULE DE BREVET EUROPEEN**

(45) Date de publication et mention de la délivrance du brevet:
**06.05.2009 Bulletin 2009/19**

(21) Numéro de dépôt: **06841990.2**

(22) Date de dépôt: **31.10.2006**

(51) Int Cl.:
*G01S 1/00* (2006.01)   *G01S 5/14* (2006.01)

(86) Numéro de dépôt international:
**PCT/FR2006/051127**

(87) Numéro de publication internationale:
**WO 2007/051944 (10.05.2007 Gazette 2007/19)**

(54) **PROCEDE DE DETERMINATION DE LA POSITION DE SATELLITES DANS UN SYSTEME DE NAVIGATION**

VERFAHREN ZUR BESTIMMUNG DER POSITION VON SATELLITEN IN EINEM NAVIGATIONSSYSTEM

METHOD OF DETERMINING THE POSITION OF SATELLITES IN A NAVIGATION SYSTEM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **02.11.2005 FR 0511182**

(43) Date de publication de la demande:
**23.07.2008 Bulletin 2008/30**

(73) Titulaire: **Alcatel Lucent**
**75008 Paris (FR)**

(72) Inventeur: **MONNERAT, Michel**
**F-31240 L'Union (FR)**

(74) Mandataire: **Hedarchet, Stéphane**
**Alcatel Lucent**
**Intellectual Property & Standards**
**54 rue La Boétie**
**75008 Paris (FR)**

(56) Documents cités:
**EP-A- 1 248 117**     **US-A- 6 075 987**
**US-A1- 2003 014 188**

**EP 1 946 141 B1**

**Description**

La présente invention concerne un procédé de détermination du modèle de navigation des satellites d'une constellation ainsi que de la transmission d'un tel modèle à un récepteur de navigation par satellites en vue d'une amélioration de ses performances pour l'évaluation de sa position. Il est entendu par modèle de navigation un ensemble de paramètres permettant d'élaborer la position d'un satellite donné en fonction du temps. Le modèle de navigation fait également référence par extension à un ensemble de paramètres permettant à un récepteur de déterminer une correction à apporter à l'horloge bord des satellites transmise.

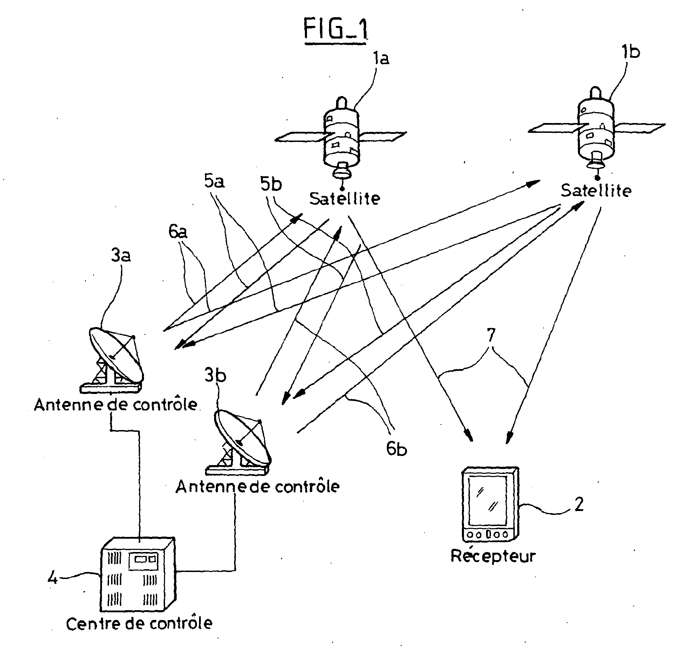

Dans les systèmes de navigation par satellites tels que ceux connus sous les noms de GPS ("Global Positioning System" en anglais), Glonnass (Global Navigation Satellite System) ou Galileo™ (projet européen de navigation par satellites), il est connu que ces informations sont véhiculées dans le message transmis par les satellites eux-mêmes. L'élaboration de ces informations ainsi que leur acheminement vers les récepteurs est décrit dans la figure 1. Les satellites 1a, 1b sont contrôlés par le segment sol {3a, 3b, 4} du système satellitaire. Ce segment sol est constitué d'antennes de réception 3a, 3b reliées au centre de contrôle 4. Les antennes 3a, 3b reçoivent respectivement les signaux émis 5a, 5b par les satellites 1a et 1b. Les informations déduites de ces signaux sont transmises au centre de contrôle 4 qui élabore alors des informations d'orbites et de calibrage d'horloge - habituellement dénommées, par l'homme de l'art, modèle de navigation - des satellites 1a et 1b (on notera qu'à un satellite correspond un modèle de navigation). Ces informations sont ensuite transmises auxdits satellites 1a et 1b via des signaux radio-fréquence 6a et 6b. Les satellites 1a et 1b rediffusent alors ces informations via des signaux radio 7 vers un récepteur de navigation 2. Le récepteur détermine la distance le séparant de chaque satellite 1a et 1b. Par suite de réception du modèle de navigation de chaque satellite, le récepteur détermine la position des satellites puis sa propre position qui est fournie par la détermination de l'intersection des sphères ayant pour centre chaque satellite et pour rayon le distance du satellite au récepteur. Le codage de la position du satellites est fournie sous forme de paramètres kepleriens dans un repère lié à la terre. Dans le cadre du système GPS, l'encodage du modèle de navigation est fait suivant les 18 paramètres suivants :

| M0 | Anomalie Moyenne |
|---|---|
| Dn | Deplacement Moyen |
| E | Eccentricité |
| (A)1/2 | Racine du demi grand axe |
| OMEGA0 | Longitude du noeud ascendant |
| I0 | Inclinaison |
| W | Argument de perigée |
| OMEGADOT | Dérivée temporelle de l'ascension droite |
| IDOT | Dérivée temorelle de l'inclinaison |
| Cuc | Amplitude cosinus de l'harmonique du terme de correction de l'argument de latitude |
| Cus | Amplitude sinus de l'harmonique du terme de correction de l'argument de latitude |
| Crc | Amplitude cosinus de l'harmonique du terme de correction du rayon de l'orbite |
| Crs | Amplitude sinus de l'harmonique du terme de correction du rayon de l'orbite |
| Cic | Amplitude cosinus de l'harmonique du terme de correction de l'angle d'inclinaison |
| Cis | Amplitude sinus de l'harmonique du terme de correction de l'angle d'inclinaison |
| Af0 | Correction à l'ordre 0 de l'horloge bord |
| Af1 | Correction à l'ordre 1 de l'horloge bord |
| Af2 | Correction à l'ordre 2 de l'horloge bord |

L'utilisation de ce modèle de navigation permet au récepteur de restituer la position du satellite dans le repère terrestre.

Le signal de navigation 7 a deux fonctionnalités. La première est de fournir un moyen de calcul de distance au récepteur 2, la seconde est de véhiculer de l'information en particulier relative à la position du satellite, i.e. le modèle de navigation. Le fonctionnement commun décrit à la figure 1 suppose que le récepteur soit en mesure de démoduler l'information véhiculée pour en déduire la position du satellite. Ceci ne peut se faire qu'en présence de conditions de réception appropriées : ces conditions comprennent notamment un masquage faible et une atténuation réduite. Par ailleurs, il est connu que le débit d'informations sur le signal radio-fréquence 7 doit être le plus faible possible pour favoriser la qualité de la mesure de distance. Ceci conduit à un débit de 50bits/s sur les signaux GPS. Le temps nécessaire au récepteur 2 pour acquérir l'information complète du modèle de navigation est très long (supérieur à 30 secondes), ce qui impacte directement le temps nécessaire pour que le récepteur 2 détermine sa position.

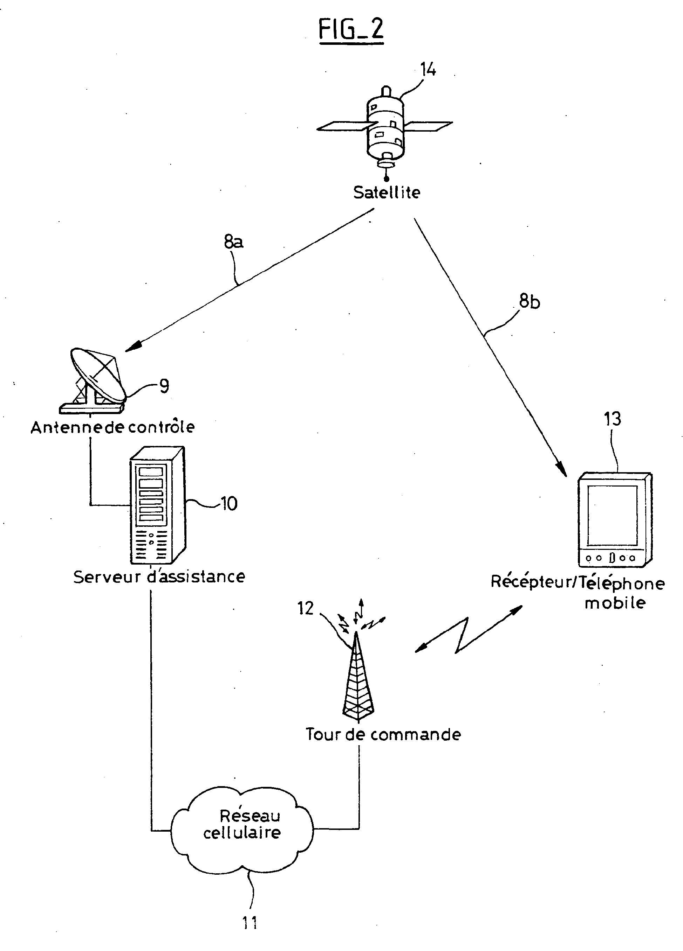

Pour pallier ce problème, il est connu d'associer, dans un même dispositif, un dispositif de radiotéléphonie cellulaire, du type téléphone mobile compatible de la norme GSM ("Global System for Mobile communications") par exemple, à un récepteur de navigation RNSS ("Radio Navigation Satellite System") tel qu'un récepteur du type GPS (Global Positioning System), GLONASS ou GALILEO par lequel le récepteur mobile capte des émissions en provenance de satellites pour connaître sa position. Ce dispositif est décrit figure 2. Le satellite 14 transmet un signal 8a de navigation comportant une information d'orbite dite modèle de navigation. Cette information est répétée avec une périodicité de 30 secondes. Un serveur de données d'assistance 10 placé dans le réseau de téléphonie mobile 11 reçoit, via une antenne de contrôle locale 9 qui lui est reliée, le message du satellite 14. Ce message est traité, par des moyens connus en soi, de manière à extraire le modèle de navigation et à le stocker jusqu'à la prochaine mise à jour faite par le satellite. Cette mise à jour intervient toutes les 2 heures. Le dispositif 13, composé d'un récepteur de positionnement satellitaire associé à un émetteur/récepteur de radio-téléphonie cellulaire, reçoit le signal 8b du satellite 14 et le traite de manière à établir la distance le séparant du satellite 14. Au préalable, le dispositif 13 interroge le serveur d'assistance 10 qui lui réachemine, de manière très rapide, le modèle de navigation du satellite 14 via la station de base 12 à laquelle il est rattaché et le réseau 11. Il est entendu que le satellite 14 est en visibilité commune du dispositif 13 et de l'antenne 9.

Ce système {9, 10, 11, 12, 13, 14} présente plusieurs avantages. Le dispositif mobile 13 a accès au modèle de navigation beaucoup plus rapidement du fait des débits d'information mis en jeu sur les réseaux de télécommunication cellulaires. D'autre part, le dispositif 13 ne lit pas sur le signal de navigation provenant du satellite le modèle de navigation, ce qui rend plus robuste le processus de localisation.

Il est cependant connu que ce dispositif est limité. En effet, dans le système décrit précédemment, le serveur d'assistance ne peut assister les dispositifs 13 que pour des satellites qui se trouvent en visibilité commune de son antenne 9 et du dispositif 13 requérant assistance. Les systèmes de navigation par satellites utilisent communément des orbites moyennes (20000 km à 25000 km d'altitude) sur lesquelles les satellites défilent par rapport à un point fixe au sol. Par suite, un serveur de données d'assistance tel que celui référencé 10, ne peut fournir le modèle de navigation qu'aux dispositifs 13 se situant dans une zone de rayon approximatif de 2000 km autour de l'antenne de réception 9. Il est connu d'utiliser un réseau d'antennes de type 9 pour couvrir le monde et ainsi assurer que le serveur d'assistance 10 soit en mesure de fournir le modèle de navigation des satellites en vue du dispositif 13. Toutefois, la mise en oeuvre d'une telle solution pose certaines difficultés. Elle est extrêmement coûteuse et lourde à maintenir puisqu'un réseau complet d'antennes est nécessaire et ce à travers le monde entier.

Les publications US 2003/014 188 A1 et US 6 075 987 montrent un procédé selon le préambule de la revendication.

La présente invention vise à fournir un procédé plus simple et bien plus efficace permettant d'assister l'ensemble des dispositifs 13 du type prédéfini, comprenant un récepteur de positionnement satellitaire associé à un émetteur/récepteur de radio-téléphonie cellulaire, quelle que soit la répartition géographique sur le globe terrestre dudit dispositif, et ce avec une seule antenne de contrôle 9, dite antenne de référence.

L'invention a donc pour objet un procédé de détermination de la position de satellites dans un système de navigation RNSS destinée à un dispositif mobile incluant un récepteur de radionavigation satellitaire RNSS et un émetteur/récepteur de radio-téléphonie cellulaire, ledit système de navigation étant complété d'un serveur de données d'assistance au service de positionnement ou de navigation, ledit serveur d'assistance étant relié à une antenne de référence permettant la réception des signaux satellitaires, **caractérisé en ce que** ledit procédé comporte les étapes suivantes :

- réception, par ledit dispositif, de données satellitaires fournies par au moins quatre satellites,
- calcul, par ledit dispositif mobile, des distances entre le dispositif mobile et lesdits satellites,
- requête, par ledit dispositif mobile, des modèles de navigation des satellites au serveur de données d'assistance,
- détermination des modèles de navigation correspondant aux satellites en visibilité présumée du dispositif mobile, ces modèles de navigation étant soit celui ou ceux diffusés par les satellites pour celui ou ceux en visibilité de l'antenne de référence lors de ladite requête, soit un modèle estimé et reconstitué par le serveur pour celui ou ceux des satellites qui ne sont pas en visibilité de l'antenne de référence.

Ce procédé tire avantage sur le fait qu'un serveur d'assistance peut fournir le modèle de navigation d'un satellite à destination d'un dispositif mobile alors que ce même satellite n'est plus en visibilité de l'antenne de référence et donc du serveur de données d'assistance.

D'autres caractéristiques et avantages de l'invention apparaîtront à l'aide de la description qui suit faite en regard des dessins annexés qui représentent :

- la figure 1 et la figure 2 représentent l'état de l'art, décrits en introduction,
- la figure 3 représente un diagramme fonctionnel illustrant les étapes de l'invention selon un mode de réalisation.

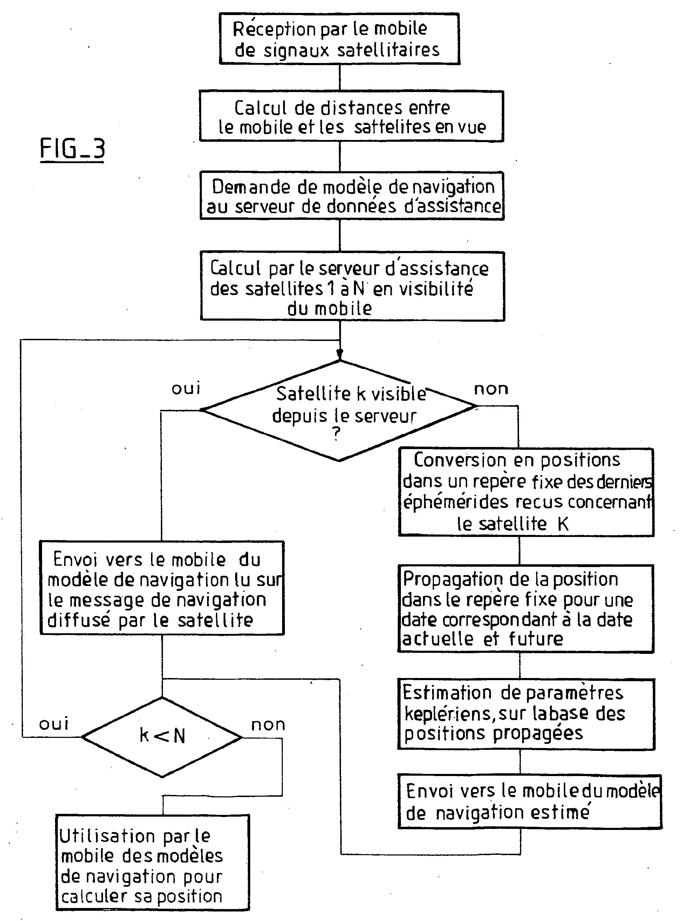

Ainsi qu'illustré sur la figure 3, l'invention est relative à un procédé de détermination de la position de satellites dans un système de navigation RNSS destinée à un dispositif mobile incluant un récepteur de radionavigation satellitaire RNSS et un émetteur/récepteur de radio-téléphonie cellulaire, ledit système de navigation étant complété d'un serveur de données d'assistance au service de positionnement ou de navigation, ledit serveur d'assistance étant relié à une antenne de référence permettant la réception des signaux satellitaires.

Ce procédé est caractérisé, comme illustré sur la figure 3, par les étapes suivantes :

- réception, par ledit dispositif, de données satellitaires fournies par au moins quatre satellites,
- calcul, par ledit dispositif mobile, des distances entre le dispositif mobile et lesdits satellites,
- requête, par ledit dispositif mobile, des modèles de navigation des satellites au serveur de données d'assistance,

détermination des modèles de navigation correspondant aux satellites en visibilité présumée du dispositif mobile, ces modèles de navigation étant soit celui ou ceux diffusés par les satellites pour celui ou ceux en visibilité de l'antenne de référence lors de ladite requête, soit un modèle estimé et reconstitué par le serveur pour celui ou ceux des satellites qui ne sont pas en visibilité de l'antenne de référence.

Pour chaque satellite qui n'est pas en visibilité de l'antenne de référence, le modèle de navigation est estimé et reconstitué selon les étapes suivantes :

après réception, par le serveur de données d'assistance du modèle de navigation transmis par le satellite lorsque ce dernier était en visibilité de son antenne de référence,

- conversion du modèle de navigation en orbite dans un repère fixe centré sur la terre,
- propagation de la position du satellite au delà de la limite de validité du modèle de navigation fourni par le message du satellite,
- lors d'une requête d'assistance établie par le dispositif mobile d'un lieu et à une date où le satellite qui est en visibilité dudit dispositif mobile ne l'est plus de l'antenne de référence dudit serveur d'assistance,

  • estimation par le serveur d'assistance d'un modèle de navigation képlerien dans le repère terrestre selon un format identique à celui utilisé dans le message de navigation et valable sur une plage de temps non incluse dans la plage de temps de validité du modèle de navigation reçu par le serveur lorsque le satellite était en sa visibilité, cette estimation se faisant sur la base de la propagation des positions effectuées au préalable,
  • diffusion du modèle de navigation ainsi reconstitué vers ledit dispositif mobile à l'origine de la requête.

La conversion du modèle de navigation en orbite du satellite dans un repère fixe centré sur la terre est décrit dans l'ICD ("Interface Control Document") GPS 200c. La propagation de cette orbite pour des temps en dehors de la durée de validité du modèle de navigation peut se faire par l'intégration double du modèle de forces suivant :

• Attraction terrestre, $M_s \vec{g}_{Earth}(r,\lambda,\phi) = M_s - \vec{\nabla}U(r,\lambda,\phi)$ où $M_s$ est la Masse du satellite et $\vec{g}(r,\lambda,\phi)$ est le champ gravitationnel terrestre à la distance r du centre de la terre à la longitude $\lambda$ et la latitude $\phi$

• Attraction lunaire : $\quad \vec{g}_L = \sum_{b=1}^{2} GM_L \left( \dfrac{\vec{x}_l - \vec{x}}{\left\| \vec{x}_l - \vec{x} \right\|^3} - \dfrac{\vec{x}_l}{\left\| \vec{x}_l \right\|^3} \right)$ où $M_l$ est la masse lunaire, $x_l$ la position de la lune et x la position du satellite

• Attraction solaire: $\quad \vec{g}_s = \sum_{b=1}^{2} GM_S \left( \dfrac{\vec{x}_s - \vec{x}}{\left\| \vec{x}_s - \vec{x} \right\|^3} - \dfrac{\vec{x}_l}{\left\| \vec{x}_l \right\|^3} \right)$, où $M_s$ est la masse solaire et $x_s$ la position du soleil et x la position du satellite

- Pression Solaire, $\vec{a}_{sun} = -k.\left(\dfrac{d_{UA}}{d_{sat}}\right)^2.\vec{e}_r$ , où $d_{ua}$ est l'unité astronomique (149598 10$^6$ ), $d_{sat}$ la distance du

soleil au satellite, k une constante dépendant du satellite, et $\vec{e}_r = \dfrac{\vec{x}_{sat} - \vec{x}_{sun}}{|\vec{x}_{sat} - \vec{x}_{sun}|}$

La propagation de la position des satellites se fait par intégration double du modèle de force pris en compte. Les conditions initiales pour mener à bien cette intégration double sont tirées des informations fournies par le modèle de navigation transmis par le satellite lui même et collectée par le serveur d'assistance. Une fois propagée l'orbite, le serveur estime les paramètres képleriens représentatifs de l'orbite dans un repère lié à la terre. Cette estimation se fait par minimisation d'un critère moindres carrés connu de l'homme de l'art.

Comme on le cerne désormais, le procédé présente l'avantage précieux qu'un serveur d'assistance peut fournir le modèle de propagation des satellites en vue d'un utilisateur alors que ces mêmes satellites ne sont plus en visibilité de l'antenne de référence et donc du serveur de données d'assistance, et que le modèle de navigation collecté lors de leur passage en visibilité dudit serveur n'est plus valide.

Sous une autre forme, une amélioration du procédé peut être apportée permettant, en sus, de fournir au dispositif mobile un modèle de navigation dont la durée de validité est bien plus longue. Cette deuxième mise en oeuvre se **caractérise en ce qu**i suit :

Le procédé comporte les étapes suivantes :

- réception, par le serveur de données d'assistance, du modèle de navigation transmis par le satellite lorsque ce dernier était en visibilité de son antenne de référence,
- conversion du modèle de navigation en orbite dans un repère fixe centré sur la terre,
- propagation de la position du satellite au delà de la limite de validité du modèle de navigation fourni par le message du satellite,
- lors d'une requête d'assistance établie par le dispositif mobile d'un lieu et à une date où le satellite qui est en visibilité dudit dispositif mobile ne l'est plus de l'antenne de référence dudit serveur d'assistance,

  - estimation par le serveur d'assistance d'un modèle de navigation képlerien dans un repère fixe de Copernic,
  - Diffusion vers ledit dispositif mobile d'un modèle dudit modèle Képlerien en repère fixe ainsi que des paramètres de rotation de la terre de type IERS96 ("International Earth Rotation & Reference Systems Service"), explicités ci-dessous,
  - A réception desdits paramètres Képleriens et desdits paramètres représentatifs de la rotation de la terre, calcul par le dispositif mobile de la position des satellites dans le repère fixe, puis conversion de ces positions dans le repère lié à la Terre grâce aux paramètres de rotation de la terre.

Lesdits paramètres de rotation de la terre permettent de passer d'un repère fixe à un repère mobile lié à la terre. Ils se caractérisent sous la forme de 4 rotations :

- Rotation des pôles,
- Rotation sidérale de la terre,
- Précession,
- Nutation.

Cette deuxième implémentation permet aux dispositifs mobiles de calculer la position des satellites de manière indépendante du serveur de données d'assistance sur une horizon de temps beaucoup plus long et par suite de minimiser l'utilisation de la bande passante sur le réseau de télécommunication.

**Revendications**

1. Procédé de détermination de la position de satellites dans un système de navigation RNSS destinée à un dispositif mobile incluant un récepteur de radionavigation satellitaire RNSS et un émetteur/récepteur de radio-téléphonie cellulaire, ledit système de navigation étant complété d'un serveur de données d'assistance au service de positionnement ou de navigation, ledit serveur d'assistance étant relié à une antenne de référence permettant la réception des signaux satellitaires, ledit procédé comportant les étapes suivantes :

- réception, par ledit dispositif mobile, de données satellitaires fournies par au moins quatre satellites,
- calcul, par ledit dispositif mobile, des distances entre le dispositif mobile et lesdits satellites,
- requête, par ledit dispositif mobile, du modèle de navigation au serveur de données d'assistance,
- détermination du modèle de navigation correspondant auxdits satellites en visibilité présumée du dispositif mobile,

**caractérisé en ce que**

ledit modèle de navigation est soit celui diffusé par les satellites lorsque ceux-ci sont en visibilité de l'antenne de référence lors de ladite requête, soit un modèle estimé et reconstitué par le serveur lorsque les satellites ne sont pas en visibilité de l'antenne de référence.

**2.** Procédé selon la revendication 1, **caractérisé en ce que,** pour chaque satellite qui n'est pas en visibilité de l'antenne de référence, le modèle de navigation est estimé et reconstitué selon les étapes suivantes :

après dernière réception, par le serveur de données d'assistance du modèle de navigation transmis par le satellite lorsque ce dernier était en visibilité de son antenne de référence,

- conversion du modèle de navigation en orbite dans un repère fixe centré sur la terre,
- propagation de la position du satellite au delà de la limite de validité du modèle de navigation fourni par le message du satellite,
- lors d'une requête d'assistance établie par le dispositif mobile d'un lieu et à une date où le satellite qui est en visibilité dudit dispositif mobile ne l'est plus de l'antenne de référence dudit serveur d'assistance,

• estimation par le serveur d'assistance d'un modèle de navigation képlerien dans le repère terrestre selon un format identique à celui utilisé dans le message de navigation et valable sur une plage de temps non incluse dans la plage de temps de validité du modèle de navigation reçu par le serveur lorsque le satellite était en sa visibilité, cette estimation se faisant sur la base de la propagation des positions effectuées au préalable,

• diffusion du modèle de navigation ainsi reconstitué vers ledit dispositif mobile à l'origine de la requête.

**3.** Procédé selon la revendication 2, **caractérisé en ce que** la propagation de cette orbite pour des temps en dehors de la durée de validité du modèle de navigation est réalisée par l'intégration double du modèle de forces suivant :

• Attraction terrestre, $M_s\vec{g}_{Earth}(r,\lambda,\phi) = M_s - \vec{\nabla}U(r,\lambda,\phi)$ où $M_s$ est la Masse du satellite et $\vec{g}(r,\lambda,\phi)$ est le champ gravitationnel terrestre à la distance r du centre de la terre à la longitude $\lambda$ et la latitude $\phi$

• Attraction lunaire : $\vec{g}_L = \sum_{b=1}^{2} GM_L \left( \dfrac{\vec{x}_l - \vec{x}}{\left\| \vec{x}_l - \vec{x} \right\|^3} - \dfrac{\vec{x}_l}{\left\| \vec{x}_l \right\|^3} \right)$ où $M_l$ est la masse lunaire, $x_l$ la position de la lune et x la position du satellite

• Attraction solaire : $\vec{g}_s = \sum_{b=1}^{2} GM_S \left( \dfrac{\vec{x}_s - \vec{x}}{\left\| \vec{x}_s - \vec{x} \right\|^3} - \dfrac{\vec{x}_l}{\left\| \vec{x}_l \right\|^3} \right)$ , où $M_s$ est la masse solaire et $x_s$ la position du

soleil et x la position du satellite

• Pression Solaire, $\vec{a}_{sun} = -k.\left( \dfrac{d_{UA}}{d_{sat}} \right)^2 .\vec{e}_r$ , où $d_{ua}$ est l'unité astronomique (149598 $10^6$ ), $d_{sat}$ la distance

du soleil au satellite, k une constante dépendant du satellite, et $\vec{e}_r = \dfrac{\vec{x}_{sat} - \vec{x}_{sun}}{\left| \vec{x}_{sat} - \vec{x}_{sun} \right|}$

les conditions initiales pour mener à bien cette intégration double étant tirées des informations fournies par le modèle de navigation transmis par le satellite lui même et collectée par le serveur d'assistance,

une fois propagée l'orbite, le serveur estimant les paramètres képleriens représentatifs de l'orbite dans un repère lié à la terre, cette estimation se faisant par minimisation d'un critère moindres carrés.

**4.** Procédé de détermination de la position d'un dispositif mobile incluant un récepteur de radionavigation satellitaire RNSS et un émetteur/récepteur de radio-téléphonie cellulaire, ledit dispositif étant inclus dans un système de navigation RNSS complété d'un serveur de données d'assistance au service de positionnement ou de navigation pour le dispositif mobile, **caractérisé en ce que** le dispositif mobile détermine sa position au moyen du modèle de navigation fourni par le procédé de détermination de la position de satellites selon l'une des revendications 1 à 3.

**5.** Dispositif mobile incluant un récepteur de radionavigation satellitaire RNSS et un émetteur/récepteur de radio-téléphonie cellulaire, ledit dispositif étant inclus dans un système de navigation RNSS complété d'un serveur de données d'assistance au service de positionnement ou de navigation pour le dispositif mobile, **caractérisé en ce qu'**il détermine sa position en mettant en oeuvre le procédé de détermination de la position de satellites selon l'une des revendications 1 à 3.

## Claims

**1.** Method for determining the position of satellites in an RNSS navigation system intended for a mobile device including an RNSS radio navigation satellite receiver and a cellular radio-telephone transceiver, said navigation system being completed by an assistance data server in the positioning or navigation service, said assistance server being connected to a reference antenna allowing reception of satellite signals, said technique comprising the following stages:

- reception, by said mobile device, of satellite data supplied by at least four satellites,
- calculation, by said mobile device, of distances between the mobile device and said satellites,
- request, by said mobile device, to the assistance data server for the navigation model,
- determination of the navigation model corresponding to said satellites presumed visible to the mobile device, **characterised in that** said navigation model is either that broadcast by the satellites when the latter are visible to the reference antenna at the time of said request, or a model estimated and reconstructed by the server when the satellites are not visible to the reference antenna.

**2.** Method according to claim 1, **characterised in that,** for each satellite which is not visible to the reference antenna, the navigation model is estimated and reconstructed according to the following stages:

after the last reception, by the assistance data server of the navigation model transmitted by the satellite when the latter was visible to its reference antenna,

- conversion of the navigation model into an orbit at a fixed reference point centred on the earth,
- propagation of the satellite position beyond the limit of the validity of the navigation model supplied by the satellite message,
- when an assistance request made by the mobile device from a place where and at a date when the satellite is visible to said mobile device is no longer from the reference antenna of said assistance server,

• estimation by the assistance server of a Keplerian navigation model at the terrestrial reference point according to a format identical to that used in the navigation message and valid over a time range not included in the valid time range of the navigation model received by the server when the satellite was visible to it, this estimate being made on the basis of the propagation of the positions made beforehand,
• broadcasting of the navigation model thus reconstructed to said mobile device initiating the request.

**3.** Method according to claim 2, **characterised in that** the propagation of this orbit for times outside the duration of validity of the navigation model is implemented by double integration of the following model of forces:

• Terrestrial attraction, $M_s\vec{g}_{Earth}(r,\lambda,\phi) = M_s - \vec{\nabla}U(r,\lambda,\phi)$ where $M_s$ is the satellite mass and $\vec{g}(r,\lambda,\phi)$ is the terrestrial gravitational field at distance r from the centre of the earth at longitude $\lambda$ and latitude $\Phi$

• Lunar attraction, $\vec{g}_L = \sum_{b=1}^{2} GM_L \left( \dfrac{\vec{x}_l - \vec{x}}{\|\vec{x}_l - \vec{x}\|^3} - \dfrac{\vec{x}_l}{\|\vec{x}_l\|^3} \right)$ where $M_l$ is the lunar mass, $x_1$ the position of the moon and x the position of the satellite

• Solar attraction: $\vec{g}_s = \sum_{b=1}^{2} GM_S \left( \dfrac{\vec{x}_s - \vec{x}}{\|\vec{x}_s - \vec{x}\|^3} - \dfrac{\vec{x}_l}{\|\vec{x}_l\|^3} \right)$ where $M_s$ is the solar mass, $x_s$ the position of the sun and x the position of the satellite

• Solar pressure, $\vec{a}_{sun} = -k.\left( \dfrac{d_{UA}}{d_{sat}} \right)^2 .\vec{e}_r$, where $d_{ua}$ is the AU ($149{,}598\ 10^6$), $d_{sat}$ the distance of the satellite from the sun, k a satellite-dependent constant, and $\vec{e}_r = \dfrac{\vec{x}_{sat} - \vec{x}_{sun}}{|\vec{x}_{sat} - \vec{x}_{sun}|}$

the initial conditions for calculating this double integration being taken from information provided by the navigation model transmitted by the satellite itself and collected by the assistance server,

once the orbit is propagated, the server estimating the Keplerian parameters representative of the orbit at a reference point linked to the earth, this estimate being made by minimising a least-squares criterion.

4. Method for determination of the position of a mobile device including an RNSS radio navigation satellite receiver and a cellular radio telephone transceiver, said device being included in an RNSS navigation system completed by an assistance data server in the positioning or navigation service for the mobile device, **characterised in that** the mobile device determines its position by means of a navigation model provided by the technique of determination of the position of the satellites according to one of claims 1 to 3.

5. Mobile device including an RNSS radio navigation satellite receiver and a cellular radio telephone transceiver, said device being included in an RNSS navigation system completed by an assistance data server in the positioning or navigation service for the mobile device, **characterised in that** it determines its position by using the technique for determination of the position of the satellites according to one of claims 1 to 3.

**Patentansprüche**

1. Verfahren zur Positionsbestimmung von Satelliten in einem RNSS-Navigationssystem für eine Mobilvorrichtung mit einem satellitengestützten RNSS-Funknavigationsempfänger und einem zellularen Funktelefonie-Transceiver, wobei das besagte Navigationssystem mit einem Hilfsdatenserver für den Positionsbestimmungs- oder Navigationsdienst ausgestattet ist, wobei der besagte Hilfsserver mit einer Referenzantenne verbunden ist, welche den Empfang der Satellitensignale ermöglicht, wobei das Verfahren die folgenden Schritte umfasst:

- Empfangen, durch die besagte Mobilvorrichtung, der von mindestens vier Satelliten gelieferten Satellitendaten,
- Berechnen, durch die besagte Mobilvorrichtung, der Entfernungen zwischen der Mobilvorrichtung und den besagten Satelliten,
- Anfordern, durch die besagte Mobilvorrichtung, des Navigationsmodells vom Hilfsdatenserver,
- Bestimmen des Navigationsmodells, welches den besagten Satelliten bei vermutlicher Sichtverbindung mit der Mobilvorrichtung entspricht, **dadurch gekennzeichnet, dass** das besagte Navigationsmodell entweder dasjenige, welches von den Satelliten ausgestrahlt wird, wenn diese anlässlich der besagten Anforderung mit der Referenzantenne in Sichtverbindung stehen, oder ein vom Server geschätztes und wiederhergestelltes Modell ist, wenn die Satelliten sich nicht in Sichtverbindung mit der Referenzantenne befinden.

2. Verfahren nach Anspruch 1, **dadurch gekennzeichnet, dass** das Navigationsmodell für jeden Satelliten, welcher nicht mit der Referenzantenne in Sichtverbindung steht, gemäß den folgenden Schritten geschätzt und wiederhergestellt wird:

Nach dem letzten Empfang, durch den Hilfsdatenserver, des Navigationsmodells, welches vom Satelliten übertragen wurde, als dieser mit seiner Referenzantenne in Sichtverbindung stand,

- Konvertieren des Navigationsmodells in Umlaufbahn in einen erdzentrierten Festpunkt,
- Propagieren der Position des Satelliten über die Gültigkeitsgrenze des von der Satellitennachricht gelieferten Navigationsmodells hinaus,
- anlässlich einer von der Mobilvorrichtung ausgegebenen Hilfsanforderung für einen Ort und an einem Datum, an welchem der Satellit, welcher mit der besagten Mobilvorrichtung in Sichtverbindung steht, nicht mehr mit der Referenzantenne des besagten Hilfsservers in Sichtverbindung steht ,

• Schätzen, durch den Hilfsserver, eines Keplerschen Navigationsmodells im terrestrischen Festpunkt gemäß einem Format, welches mit dem in der Navigationsnachricht verwendeten Format identisch ist und über einen Zeitbereich, welcher nicht im Zeitbereich der Gültigkeit des vom Server empfangenen Navigationsmodells, als der Satellit mit diesem in Sichtverbindung stand, begriffen ist, wobei diese Schätzung auf der Basis der Propagierung der zuvor durchgeführten Positionen erfolgt,
• Ausstrahlen des auf diese Weise wiederhergestellten Navigationsmodells an die besagte Mobilvorrichtung, welche die Anforderung ausgegeben hat.

3. Verfahren nach Anspruch 2, **dadurch gekennzeichnet, dass** die Propagierung dieser Umlaufbahn für die Zeit außerhalb der Gültigkeitsdauer des Navigationsmodells durch die doppelte Integration des folgenden Kräftemodells erfolgt:

• Erdanziehungskraft, $M_s\vec{g}_{Earth}(r,\lambda,\phi) = M_s - \vec{\nabla}U(r,\lambda,\phi)$ wobei $M_s$ die Masse des Satelliten und $\vec{g}(r,\lambda,\phi)$ das terrestrische Gravitationsfeld in der Entfernung r des Erdmittelpunkts im Längengrad $\lambda$ und im Breitengrad $\phi$ ist

• Mondanziehungskraft: $\vec{g}_L = \sum_{b=1}^{2} GM_L\left(\frac{\vec{x}_l - \vec{x}}{\|\vec{x}_l - \vec{x}\|^3} - \frac{\vec{x}_l}{\|\vec{x}_l\|^3}\right)$ wobei $M_l$ die Mondmasse, $x_l$ die Position des Mondes und x die Position des Satelliten ist

• Sonnenanziehungskraft: $\vec{g}_s = \sum_{b=1}^{2} GM_s\left(\frac{\vec{x}_s - \vec{x}}{\|\vec{x}_s - \vec{x}\|^3} - \frac{\vec{x}_l}{\|\vec{x}_l\|^3}\right)$ wobei $M_s$ die Sonnenmasse und $x_s$ die Position der Sonne und x die Position des Satelliten ist

• Sonnendruck: $\vec{a}_{sun} = -k.\left(\frac{d_{UA}}{d_{sat}}\right)^2.\vec{e}_r$ wobei $d_{ua}$ die astronomische Einheit (149598 10$^6$), $d_{sat}$ die Entfernung von der Sonne zum Satelliten, k eine vom Satelliten abhängige Konstante, und $\vec{e}_r = \frac{\vec{x}_{sat} - \vec{x}_{sun}}{|\vec{x}_{sat} - \vec{x}_{sun}|}$ ist,

wobei die Anfangsbedingungen zum erfolgreichen Durchführen dieser doppelten Integration von den Informationen, welche von dem vom Satelliten selbst übertragenen und vom Hilfsserver erfassten Navigationsmodell geliefert werden, abgeleitet werden,
wobei der Server nach der Propagierung der Umlaufbahn die Keplerschen Parameter, welche für die Umlaufbahn in einem mit der Erde verbundenen Festpunkt repräsentativ sind, schätzt, wobei diese Schätzung durch die Minimierung eines Kriteriums der kleinsten Fehlerquadrate erfolgt.

4. Verfahren zur Positionsbestimmung einer Mobilvorrichtung, welche über einen satellitengestützten RNSS-Funknavigationsempfänger und einen zellularen Funktelefonie-Transceiver verfügt, wobei die besagte Vorrichtung in einem mit einem Hilfsdatenserver für den Positionsbestimmungs- oder Navigationsdienst für die Mobilvorrichtung ausgestatteten RNSS-Navigationssystem inbegriffen ist, **dadurch gekennzeichnet, dass** die Mobilvorrichtung ihre Position anhand des von dem Satellitenpositionsbestimmungsverfahren nach einem der Ansprüche 1 bis 3 gelieferten Navigationsmodells bestimmt.

5. Mobilvorrichtung, welche einen satellitengestützten RNSS-Funknavigationsempfänger und einen zellularen Funktelefonie-Transceiver umfasst, wobei die Vorrichtung in einem mit einem Hilfsdatenserver für den Positionsbestimmungs- oder Navigationsdienst für die Mobilvorrichtung ausgestatteten RNSS-Navigationssystem inbegriffen ist, **dadurch gekennzeichnet, dass** sie ihre Position durch Umsetzen des Satellitenpositionsbestimmungsverfahrens nach einem der Ansprüche 1 bis 3 bestimmt.

## FIG_1

1a

1b

5a  5b

6a

3a

Satellite

Satellite

7

Antenne de contrôle

3b

Antenne de contrôle

6b

2

Récepteur

4

Centre de contrôle

# FIG_2

14
Satellite

8a

8b

9
Antenne de contrôle

13

10
Serveur d'assistance

Récepteur/Téléphone
mobile

12

Tour de commande

Réseau
cellulaire

11

FIG_3

**RÉFÉRENCES CITÉES DANS LA DESCRIPTION**

**Documents brevets cités dans la description**

- US 2003014188 A1

- US 6075987 A